# EUROPÄISCHE PATENTSCHRIFT

(11) **EP 0 622 932 B1**
(45) Veröffentlichungstag und Bekanntmachung des Hinweises auf die Patenterteilung: **09.10.2002**
(21) Anmeldenummer: 94105425.6
(22) Anmeldetag: 08.04.1994
(51) Int. Cl.: H04M 1/18, H04M 1/72, G08B 3/10

(54) **Telekommunikations-Endgerät mit einem Vibrationsmotor zur haptischen Signalgebung**
Telecommunication terminal apparatus comprising a vibration generator for tactile alerting
Terminal de télécommunication comportant un générateur de vibrations pour des alertes tactiles

(30) Priorität: 24.04.1993 DE 4313531
(43) Veröffentlichungstag der Anmeldung: 02.11.1994
(73) Patentinhaber: ROBERT BOSCH GMBH, 70442 Stuttgart (DE)
(72) Erfinder: Kunze, Peter, D-38304 Wolfenbüttel (DE)

(56) Entgegenhaltungen:
- WO-A-91/03914
- GB-A- 2 179 775
- GB-A- 2 240 902
- US-A- 5 107 155

## Beschreibung

### Stand der Technik

Aus der EP 467 071 A2 ist ein Telekommunikations-Endgerät bekannt, welches eine anzurufende Person so diskret auf einen vorliegenden Anruf hinweist, dass unbeteiligte Personen nicht aufmerksam werden. Dazu umfaßt das Telekommunikations-Endgerät einen Vibrationsmotor, der bei einem vorliegenden Anruf Vibrationen bewirkt, die vom Benutzer des Telekommunikations-Endgeräts spürbar, d.h. haptisch erkannt werden können. Ein so ausgebildetes Telekommunikations-Endgerät ist allerdings nicht für explosionsgefährdete Bereiche geeignet, da eine Funkenbildung im Vibrationsmotor auftreten kann, die ein vorhandenes Gasgemisch zünden kann. Dadurch kommt es dann zu gefährlichen Explosionen.

Aus der US 5 107 155 ist ein kleiner Gleichstrom-Vibratormotor zum Gebrauch in einem drahtlosen Warngerät bekannt, der ein Gehäuse umfasst, an dem ein nichtrotierender Schaft befestigt ist. An dem Schaft ist ein Rotor rotationsfähig montiert. Der Rotor bringt eine exzentrische Last zur Rotation, wodurch Vibrationen verursacht werden, wenn der Rotor rotiert. Aus der GB 2 240 902 A ist ein Telefon mit einem hermetisch versiegelten Raum bekannt, in dem elektronische Komponenten untergebracht sind. Das Telefon umfasst außerdem einen Raum zum Anschluß eines Kabels, der von dem Raum mit den elektronischen Komponenten isoliert ist.

### Vorteile der Erfindung

Das erfindungsgemäße Telekommunikations-Endgerät mit den kennzeichnenden Merkmalen des Hauptanspruchs hat demgegenüber den Vorteil, dass der Vibrationsmotor elektrische Anschlüsse und ein Gehäuse aufweist, das den Vibrationsmotor ganz oder teilweise gasdicht einschließt, in dem das Gehäuse anschlußseitig durch eine Vergußmasse, welche die elektrischen Anschlüsse umschließt, verschlossen ist, wodurch der Vibrationsmotor und auch das damit ausgestattete Telekommunikations-Endgerät auch in explosionsgefährdeten Bereichen benutzbar ist.

Durch die in den abhängigen Ansprüchen aufgeführten Maßnahmen sind vorteilhafte Weiterbildungen und Verbesserungen des im Hauptanspruch angegebenen Telekommunikations-Endgeräts möglich.
Die Ausbildung des Gehäuses als einseitig offene Hülse, die mit der Vergußmasse verschlossen ist, bildet eine besonders leicht montier- und herstellbare Ausführungsform. Die Ausbildung des Gehäuses als beidseitig offenes Rohrstück zusammen mit einer einseitig offenen Kappe ist in besonders vorteilhafter Weise für Motoren geeignet, an deren Außenwand bereits ein Befestigungsflansch existiert. Eine zusätzliche Abdichtung der Kappe und des beidseitig offenen Rohrstücks mit einer Dichtmasse führt den Vorteil mit sich, daß auch Gehäuse bzw. Vibrationsmotoren mit ungenaueren Toleranzen mit einem hohen Maß an Sicherheit abgedichtet werden können. Die Ausbildung von Einbuchtungen am Gehäuse dienen in vorteilhafter Weise der leichten Montierbarkeit und dem rutschsicheren Sitz des Gehäuses auf dem Vibrationsmotor. Ein weiterer Vorteil besteht darin, das Gehäuse einstückig mit einem beidseitig offenen Rohr auszubilden, wodurch der Vibrationsmotor materialsparend und leicht abdichtbar ist. Weitere Schaltungsteile in der Vergußmasse einzubetten, führt den Vorteil mit sich, gleichzeitig mit der Abdichtung eine einfache Form der erschütterungssicheren Halterung von Schaltungsteilen zu gewährleisten. Die Verwendung von Gießharz auf Polyurethan-Basis bildet eine besonders vorteilhafte Materialwahl, da es sich hierbei um ein leicht einbringbares und gut abdichtendes Material handelt. Die Ausgestaltung des Gehäuses aus Metall dient in vorteilhafter Weise einer einfachen Herstellbarkeit kombiniert mit einer hohen Stabilität gegen mechanische Einflüsse.

### Zeichnung

Ausführungsbeispiele der Erfindung sind in der Zeichnung dargestellt und in der nachfolgenden Beschreibung näher erläutert. Es zeigen
Figur 1 ein Telekommunikations-Endgerät mit einem Vibrationsmotor in einer teilweise aufgebrochenen Darstellung,
Figur 2 einen Vibrationsmotor mit einteiligem Gehäuse,
Figur 3 einen Vibrationsmotor mit zweiteiligem Gehäuse,
Figur 4 einen einstückig mit einem Rohr ausgebildeten Vibrationsmotor.

### Beschreibung der Ausführungsbeispiele

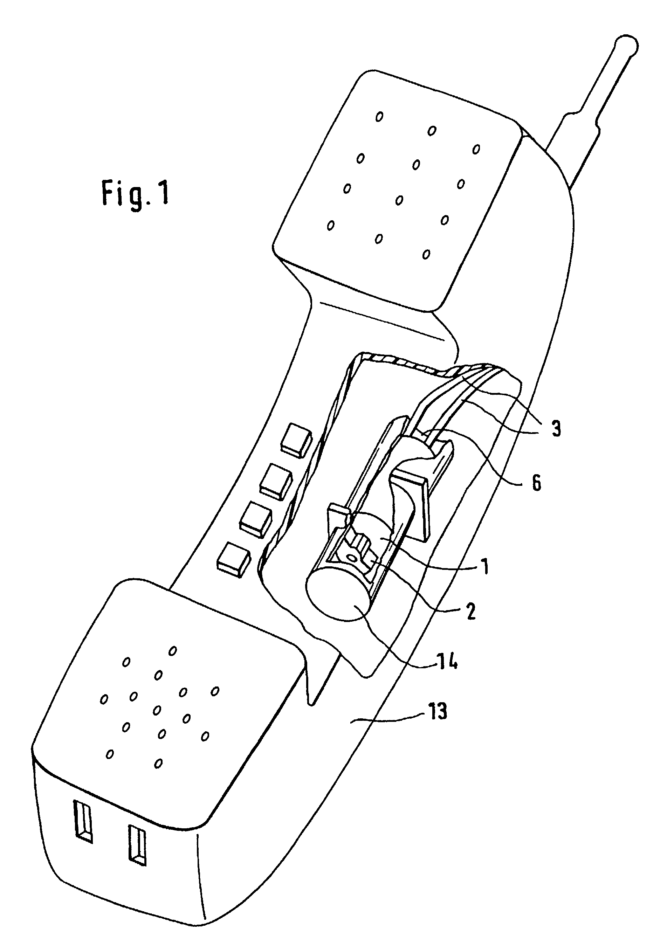

In Figur 1 ist ein Telekommunikation-Endgerät mit einem Vibrationsmotor dargestellt. Ein Telekommunikations-Endgerät 13, beispielsweise eine Mobilstation eines schnurlosen Telefons, beinhaltet in seinem Inneren einen Vibrationsmotor 1 mit einem nicht rotationssymmetrischen Schwungkörper 2 auf einer Antriebswelle an seiner Vorderseite und elektrischen Anschlüssen 3 an seiner Rückseite. Der Vibrationsmotor 1 mit dem Schwungkörper 2 befindet sich in einem länglichen einseitig offenen Gehäuse 14, dessen offenes Ende auf der Seite der elektrischen Anschlüsse 3 mit einer Vergußmasse 6 verschlossen ist. Der Vibrationsmotor 1 ist erschütterungsfest im Telekommunikations-Endgerät 13 befestigt

Bei einem am Telekommunikations-Endgerät 13 ankommenden Ruf aktiviert eine in der Zeichnung nicht dargestellte Schaltungseinrichtung den Vibrationsmotor 1, der mittels des nicht rotationssymmetrischen Schwungkörpers 2 eine Vibration erzeugt. Diese Vibration pflanzt sich auf das Telekommunikations-Endgerät 13 fort und wird vom das Telekommunikations-Endgerät 13 bei sich tragenden Benutzer fühlbar wahrgenommen. Durch die Kapselung des Vibrationsmotors 1 mit dem Schwungkörper 2 im Gehäuse 14 mit der Vergußmasse 6 kann kein explosives Gasgemisch in den Bereich des Vibrationsmotors 1 gelangen, wo eventuell elektrische Funken erzeugt werden können. Somit ist ein derart ausgebildeter Vibrationsmotor 1 und das damit verbundene Telekommunikations-Endgerät 13 für die Anwendung in explosionsgefährdeten Bereichen geeignet.

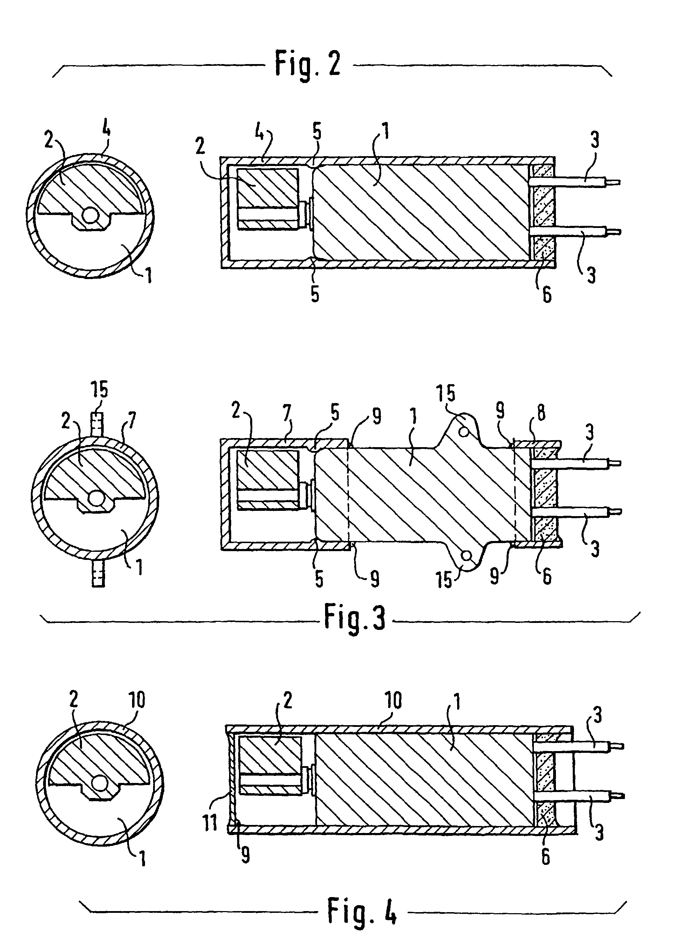

Figur 2 zeigt einen Querschnitt durch den Vibrationsmotor 1 in einer ersten Ausführungsform. Der Vibrationsmotor 1 weist an seinem hinteren Ende zwei elektrische Anschlüsse 3 auf. Am anderen Ende ist auf die Antriebswelle des Vibrationsmotors 1 der nicht rotationssymmetrische Schwungkörper 2 aufgesetzt. Der Vibrationsmotor 1 besitzt einen runden Querschnitt. Der Vibrationsmotor 1 mit dem Schwungkörper 2 befindet sich innerhalb einer der Außenform des Vibrationsmotors 1 angepaßten, einseitig offenen Hülse 4, deren offenes Ende sich auf der Seite der elektrischen Anschlüsse 3 befindet. Auf dieser Seite ist die einseitig offene Hülse 4 mit einer Vergußmasse 6, die die elektrischen Anschlüsse 3 umschließt, verschlossen. Auf der Höhe, wo sich das Motorgehäuse des Vibrationsmotors 1 verjüngt und die Antriebswelle, auf der der Schwungkörper 2 aufgebracht ist, aus dem Motorgehäuse tritt, befindet sich auf der inneren Wand der einseitig offenen Hülse 4 eine rundumlaufende Einbuchtung 5, die als mechanischer Anschlag für das Motorgehäuse des Vibrationsmotors 1 dient.

Der Vibrationsmotor 1 ist somit erschütterungsfest und rutschsicher in der einseitig offenen Hülse 4 gelagert. Durch die Abdichtung mit der Vergußmasse 6 gelangt kein Gas zum Vibrationsmotor 1.

Figur 3 zeigt ein weiteres Ausführungsbeispiel für den gekapselten Vibrationsmotor 1. Der Vibrationsmotor 1 weist hier zusätzlich zum Schwungkörper 2 und den elektrischen Anschlüssen 3 noch Befestigungsflansche 15 auf, mit denen der Vibrationsmotor 1 im Inneren des Telekommunikations-Endgeräts 13 befestigt werden kann.

Der Vorderteil des Vibrationsmotors 1, der den Schwungkörper 2 aufweist, ist mit einer einseitig offenen Kappe 7 versehen, die einer verkürzten Ausführungsform der einseitig offenen Hülse 4 aus Figur 2 entspricht. Zusätzlich ist hierbei die Fuge zwischen einseitig offener Kappe 7 und dem Vibrationsmotor 1 mit einer Dichtmasse 9 verschlossen. Am Ende mit dem elektrischen Anschlüssen 3 weist der Vibrationsmotor 1 ein beidseitig offenes Rohrstück 8 auf, das ebenfalls an der Fuge zum Vibrationsmotor 1 mit der Dichtmasse 9 verschlossen ist. Die elektrischen Anschlüsse 3 sind wiederum in einer Vergußmasse 6 eingebettet, die das offene Ende des beidseitig offenen Rohrstücks 8 verschließt.

Mit dieser zweiteiligen Ausführungsform des Gehäuses 14 ist eine einfache Abdichtung von Vibrationsmotoren 1 möglich, die entweder komplex geformte Motorgehäuse aufweisen oder bestimmte Außentoleranzen, z.B. für die Montierbarkeit nicht überschreiten dürfen.

Figur 4 zeigt einen Vibrationsmotor 1, dessen Außenwand als beidseitig offenes Rohr 10 ausgebildet ist. Der Vibrationsmotor 1 mit Schwungkörper 2 entspricht dem Vibrationsmotor 1 mit Schwungkörper 2 in Figur 2. Das beidseitig offene Rohr 10 überragt dabei in seiner Länge den Schwungkörper 2 und auch zu einem Teil die elektrischen Anschlüsse 3. Auf der Seite der elektrischen Anschlüsse 3 ist der Vibrationsmotor 1 wiederum mit der Vergußmasse 6 abgedichtet. Auf der gegenüberliegenden Seite ist ein Deckel 11 vorgesehen, welcher mittels der Dichtmasse 9 die rohrförmige Außenwand abschließt.

Zur Befestigung ist vorgesehen, die verschiedenen Gehäuseformen mit Befestigungsmitteln, wie Flanschen, Laschen etc. zu versehen, mit denen das Gehäuse 14 im Telekommunikations-Endgerät fixiert werden kann. Weiter ist es möglich, das Gehäuse 14 zumindest teilweise einstückig mit dem Telekommunikations-Endgerät-Gehäuse auszubilden, wodurch Befestigung und Abdichtung kombiniert werden können.

## Patentansprüche

1. Telekommunikationsendgerät mit einem Vibrationsmotor zur haptischen Signalgebung, **dadurch gekennzeichnet, dass** der Vibrationsmotor (1) elektrische Anschlüsse (3) und ein Gehäuse (14) aufweist, das den Vibrationsmotor (1) ganz oder teilweise gasdicht einschließt, indem das Gehäuse (14) anschlußseitig durch eine Vergußmasse (6), welche die elektrischen Anschlüsse (3) umschließt, verschlossen ist.

2. Telekommunikations-Endgerät nach Anspruch 1, **dadurch gekennzeichnet, dass** das Gehäuse (14) eine einseitig offene Hülse (4) ist, wobei deren offenes Ende nach dem Einführen des Vibrationsmotors (1) mit der Vergußmasse (6) verschlossen ist.

3. Telekommunikations-Endgerät nach Anspruch 1, **dadurch gekennzeichnet, daß** das Gehäuse (14) eine einseitig offene Kappe (7) sowie ein beidseitig offenes Rohrstück (8) aufweist, wobei das beidseitig offene Rohrstück (8) im auf ein Ende des Vibrationsmotors (1) aufgesetzten Zustand einseitig mit der Vergußmasse (6) verschlossen ist und die einseitig offene Kappe (7) auf das andere Ende des Vibrationsmotors (1) aufgeschoben ist.

4. Telekommunikations-Endgerät nach Anspruch 3, **dadurch gekennzeichnet, daß** der Sitz der Kappe (7) als auch des beidseitig offenen Rohrstücks (8) mit einer Dichtmasse (9) gasdicht abgedichtet ist.

5. Telekommunikations-Endgerät nach einem der Ansprüche 1 bis 4, **dadurch gekennzeichnet, daß** das Gehäuse (14) Einbuchtungen (5) aufweist, mit denen die Lage des Vibrationsmotors (1) zum Gehäuse (14) fixiert ist.

6. Telekommunikations-Endgerät nach Anspruch 1, **dadurch gekennzeichnet, daß** das Gehäuse ein beidseitig offenes Rohr (10) und einen Deckel (11) aufweist, wobei das beidseitig offene Rohr (10) einstückig mit dem Vibrationsmotor (1) ausgebildet ist und den Vibrationsmotor (1) in seinen Ausmaßen überragt und daß ein Ende des beidseitig offenen Rohrs (10) mit dem Deckel (11) abgedichtet ist und das andere Ende mit der Vergußmasse (6) verschlossen ist.

7. Telekommunikations-Endgerät nach einem der Ansprüche 1 bis 6, **dadurch gekennzeichnet, daß** weitere Teile des Telekommunikationsgerätes (13) in der Vergußmasse (6) eingebettet sind.

8. Telekommunikations-Endgerät nach einem der Ansprüche 1 bis 7, **dadurch gekennzeichnet, daß** die Vergußmasse (6) ein Gießharz auf Polyurethan-Basis ist.

9. Telekommunikations-Endgerät nach Anspruch 1 bis 8, **dadurch gekennzeichnet, daß** das Gehäuse (14) aus Metall ist.

## Claims

1. Telecommunication terminal device with a vibration motor for tactile alerting, **characterized in that** the vibration motor (1) has electrical connections (3) and a housing (14), which fully or partially encloses the vibration motor (1) in a gastight manner, **in that** the housing (14) is closed on the connection side by a casting compound (6) which encloses the electrical connections (3).

2. Telecommunication terminal device according to Claim 1, **characterized in that** the housing (14) is a sleeve (4) which is open on one side, its open end being closed by the casting compound (6) after the vibration motor (1) has been introduced.

3. Telecommunication terminal device according to Claim 1, **characterized in that** the housing (14) has a cap (7) which is open on one side and a piece of tube (8) which is open on both sides, the piece of tube (8) which is open on both sides being closed on one side by the casting compound (6) in the state in which it is mounted on one end of the vibration motor (1), and the cap (7) which is open on one side having been pushed onto the other end of the vibration motor (1).

4. Telecommunication terminal device according to Claim 3, **characterized in that** the seating of the cap (7) and of the piece of tube (8) which is open on both sides is sealed in a gastight manner by a sealing compound (9).

5. Telecommunication terminal device according to one of Claims 1 to 4, **characterized in that** the housing (14) has indentations (5), by which the position of the vibration motor (1) with respect to the housing (14) is fixed.

6. Telecommunication terminal device according to Claim 1, **characterized in that** the housing has a tube (10) which is open on both sides and a cover (11), the tube (10) which is open on both sides being formed in one piece with the vibration motor (1) and protruding beyond the vibration motor (1) in its outer dimensions, and **in that** one end of the tube (10) which is open on both sides is sealed by the cover (11) and the other end is closed by the casting compound (6).

7. Telecommunication terminal device according to one of Claims 1 to 6, **characterized in that** further parts of the telecommunication device (13) are embedded in the casting compound (6).

8. Telecommunication terminal device according to one of Claims 1 to 7, **characterized in that** the casting compound (6) is a polyurethane-based casting resin.

9. Telecommunication terminal device according to Claims 1 to 8, **characterized in that** the housing (14) is made of metal.

## Revendications

1. Terminal de télécommunication comportant un moteur de vibreur pour générer un signal haptique,
**caractérisé en ce que**
le moteur du vibreur (1) comporte des branchements électriques (3) et un boîtier (14) entourant le moteur (1) en partie ou en totalité, de manière étanche aux gaz, le boîtier (14) étant fermé du côté du branchement par une masse coulée (6) qui entoure les branchements électriques (3).

2. Terminal de télécommunication selon la revendication 1,
**caractérisé en ce que**
le boîtier (14) est un manchon (4) ouvert d'un côté et son extrémité ouverte est fermée par une masse coulée (6) après mise en place du moteur (1) du vibreur.

3. Terminal de télécommunication selon la revendication 1,
**caractérisé en ce que**
le boîtier (14) comporte un capuchon (7) ouvert d'un côté et un élément tubulaire (8) ouvert des deux côtés, l'élément tubulaire (8) ouvert des deux côtés étant fermé à une extrémité par la masse coulée (7) lorsque ce manchon tubulaire est engagé sur une extrémité du moteur (1) du vibreur et le capuchon (7) ouvert d'un côté est emmanché sur l'autre extrémité du moteur (1).

4. Terminal de télécommunication selon la revendication 3,
**caractérisé en ce que**
le siège du capuchon (7) ainsi que celui du manchon tubulaire (8) ouvert des deux côtés est fermé de manière étanche aux gaz par une masse d'étanchéité (9).

5. Terminal de télécommunication selon l'une quelconque des revendications 1 à 4,
**caractérisé en ce que**
le boîtier (14) comporte des bossages rentrants (5) pour bloquer la position du moteur (1) du vibreur dans le boîtier (14).

6. Terminal de télécommunication selon la revendication 1,
**caractérisé en ce que**
le boîtier est un tube (10) ouvert des deux côtés avec un couvercle (11), le tube (10) ouvert des deux côtés étant réalisé en une seule pièce avec le moteur (1) du vibreur et dépasse le moteur (1) dans ses dimensions extérieures et
une extrémité du tube (10) ouvert des deux côtés est fermée de manière étanche par le couvercle (11), l'autre extrémité étant fermée par la masse coulée (6).

7. Terminal de télécommunication selon l'une quelconque des revendications 1 à 6,
**caractérisé en ce que**
d'autres parties de l'appareil de télécommunication (13) sont noyées dans la masse coulée (6).

8. Terminal de télécommunication selon l'une quelconque des revendications 1 à 7,
**caractérisé en ce que**
la masse coulée (6) est une résine à base de polyuréthane.

9. Terminal de télécommunication selon l'une quelconque des revendications 1 à 8,
**caractérisé en ce que**
le boîtier (14) est en métal.
